Europäisches Patentamt

European Patent Office

Office européen des brevets

(19)

(11) **EP 0 565 686 B1**

(12) **EUROPEAN PATENT SPECIFICATION**

(45) Date of publication and mention
of the grant of the patent:
**11.03.1998 Bulletin 1998/11**

(21) Application number: **92922704.9**

(22) Date of filing: **28.10.1992**

(51) Int Cl.6: **H04B 3/23**

(86) International application number:
**PCT/FI92/00285**

(87) International publication number:
**WO 93/09608 (13.05.1993 Gazette 1993/12)**

(54) **A METHOD OF PREVENTING A DIVERGENCE OF AN ADAPTIVE ECHO CANCELLER IN A NOISY SIGNAL ENVIRONMENT**

VERFAHREN ZUR VERMEIDUNG DER DIVERGENZ EINES ADAPTIVEN ECHOKOMPENSATORS IN EINER RAUSCHBEHAFTETEN SIGNALUMGEBUNG

PROCEDE PERMETTANT D'EVITER LA DIVERGENCE D'UN SUPPRESSEUR D'ECHO ADAPTATIF DANS UN ENVIRONNEMENT DE SIGNAL BRUYANT

(84) Designated Contracting States:
**AT BE CH DE DK ES FR GB GR IE IT LI LU MC NL SE**

(30) Priority: **04.11.1991 FI 915198**

(43) Date of publication of application:
**20.10.1993 Bulletin 1993/42**

(73) Proprietor: **NOKIA TELECOMMUNICATIONS OY 02150 Espoo (FI)**

(72) Inventor: **LÄHDEMÄKI, Heimo**
**SF-33960 Pirkkala (FI)**

(74) Representative: **Tomlinson, Kerry John**
**Frank B. Dehn & Co.,**
**European Patent Attorneys,**
**179 Queen Victoria Street**
**London EC4V 4EL (GB)**

(56) References cited:
**EP-A- 0 182 096          US-A- 4 645 883**
**US-A- 4 852 161**

**Description**

<u>Field of the Invention</u>

The invention relates to a method of preventing a divergence of an adaptive echo canceller in a noisy signal environment.

<u>Background of the Invention</u>

End-to-end connections of a data transmission system, such as a telephone network, often show long transit time delays, in consequence of which echo is observed for instance in the case of normal speech, when a signal is reflected from the far end of a connection back to the talker.

Electric echo is mostly caused by 2/4-wire transformers situated in terminal exchanges of a fixed telephone network or at remote subscribers' stages. Subscribers' lines of a fixed network generally comprise 2 wires for economical reasons. Interconnecting lines between exchanges comprise 4 wires.

An echo canceller is a device for processing a signal, such as a speech signal, so as to reduce echo by subtracting estimated echo from the echo (signal) occurring in a connection. The echo canceller can be either digital or analog. Echo cancelling devices are at present realized by digital signal processing, by means of which it is possible to model echo paths including considerably long transit time delays. Since the echo path in principle is different at each call, it is necessary to apply to an echo canceller a method which always adapts itself to a new echo path at the start of a call. Digital signal processing offers as a solution an adaptive filter, in which the coefficients of the filter modelling the echo path are updated on the basis of a correlation of the speech signal and the returning echo signal.

EP-A-0182096 describes an echo canceller which uses two adaptive level detectors to control the updating of coefficients in the echo canceller. US-A-4852161 describes an echo canceller which includes a detector for detecting an opened state of the echo path to produce an output to control a residual signal level measuring unit.

If a call takes place in a noisy environment, it causes certain problems with the stability of the echo path impulse response model in the echo canceller. Difficulties arise particularly if the far end is noisy and the echo level of the near end low. Divergence then occurs in the impulse response model of the echo canceller on low levels of the signal received from the far end. On the other hand, if the level of the signal received from the far end rises, echo is observed at the far end for a short time because of the diverged model of the echo path, before the echo canceller is converged back to the echo path.

<u>Disclosure of the Invention</u>

The object of the invention is among other things to alleviate the described problem.

This is achieved by means of a method according to the invention, which is characterized in that the method comprises steps of:

determining an average noise level in the echo path,
determining an attenuation of the echo path and preventing an adaptation of the echo canceller, if the level of the signal to be transmitted to the echo path and causing echo is lowered to a predetermined threshold level, said predetermined threshold level being a predetermined margin and the echo path attenuation above the average noise level.

The basic idea of the invention is that an adaptation of an adaptive filter is prevented before a lowering of the level of the signal transmitted to the echo path causes lowering of the level of the echo signal returning from the echo path to a level that will be covered by the noise occurring on the echo path. The earlier an adaptation is prevented, i.e. the greater margin is left between the noise level and the echo signal level, the better the echo path model is preserved in the echo canceller. On the other hand, the margin must not be very large, because, if the signal transmitted to the echo path had a low level for a longer time and a slow change occurred at the same time in the echo path, the consequence would also then be an incorrectness of some degree of the echo path model of the echo canceller. However, a reasonable margin is of clear benefit, because with prevented adaptation the positions and signs of the coefficients of the impulse response model remain correct, though their absolute values would be distorted as a consequence of a change in the echo path. When the positions and signs of the coefficients are correct and when the level of the signal to be transmitted to the echo path rises again and an adaptation is permitted, the echo canceller is converged considerably more quickly than if the impulse response model were entirely diverged. A suitable margin is preferably such that the distance between said threshold level and the average noise level is about 1 to 5 dB bigger than the echo path attenuation.

<u>Brief Description of the Drawings</u>

The invention is explained in the following in greater detail by means of embodiments referring to the enclosed drawings, in which

Figure 1 shows a fundamental block diagram of an echo canceller, to which the invention can be applied,
Figure 2 shows a more detailed block diagram of the echo canceller of Figure 1,

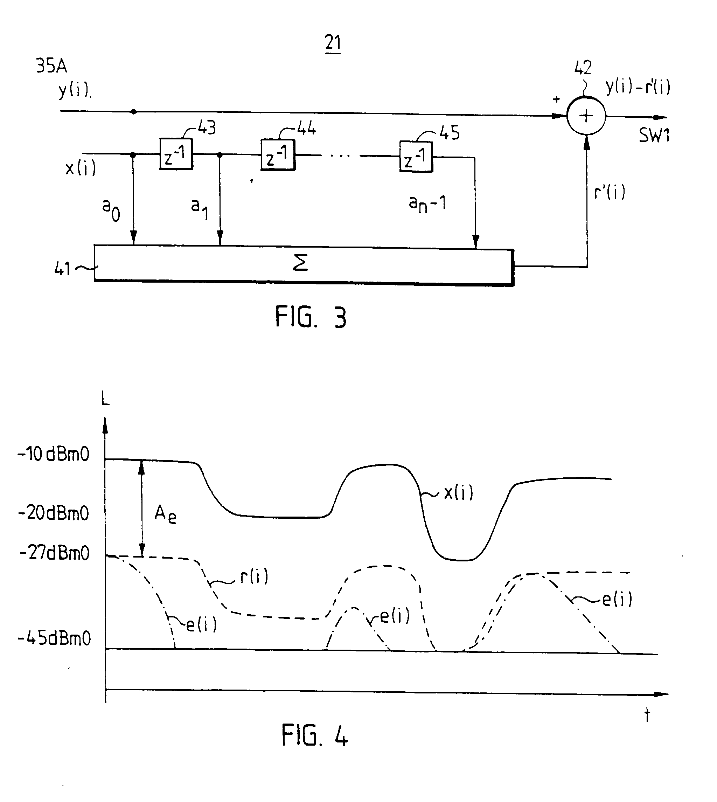

Figure 3 shows a block diagram of the digital filter 21 of Figure 2, and
Figure 4 is a graph illustrating the influence of noise on echo cancellation.

Detailed Description of the Invention

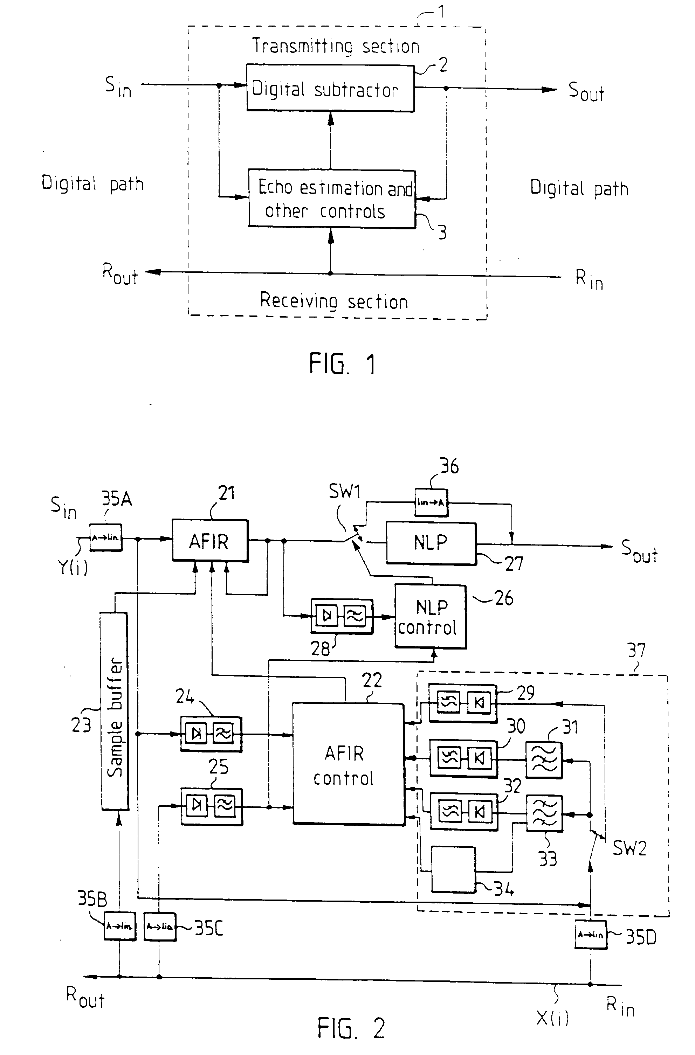

Figure 1 shows a schematic block diagram of a digital echo canceller. The digital echo canceller 1 comprises an input port $S_{in}$ and an output port $S_{out}$ for a digital signal to be transmitted as well as an input port $R_{in}$ and an output port $R_{out}$ for a digital signal to be received. The echo canceller 1 shall eliminate the echo only in the transmission direction, which is called far end in this application. The opposite direction is called near end. In Figure 1 the ports $S_{in}$ and $R_{out}$ are connected to the transmission path of the near end and the ports $S_{out}$ and $R_{in}$ to the transmission path of the far end. The echo to be cancelled is a component $r(i)$ of a speech signal $x(i)$ received at the port $R_{in}$ from the far end and transmitted forward over the port $R_{out}$ to the near end (to the echo path), which component is reflected from the near end.

If the echo canceller did not operate, the echo $r(i)$ of the far end speech signal $x(i)$ received at the port $S_{in}$ would be transmitted as such over the port $S_{out}$ to the far end. When in operation, the echo canceller creates in a processing section 3 a model (an impulse response) of the echo path of the near end on the basis of the echo signal $r(i)$ it has received at the port $S_{in}$, by means of which model it creates an echo estimate $r'(i)$ from the signal $x(i)$, which estimate is subtracted in a subtracting section 2 from the signal to be transmitted to the far end, and due to this, no echo at all is present at output $S_{out}$ in optimal case.

The diverging problem of the echo canceller constituting the background of the invention is studied next with reference to Figures 1 and 4. Figure 4 illustrates the dependence of the level of the echo signal $r(i)$ on the level of the speech signal $x(i)$ of the far end. The difference between the levels of the speech signal $x(i)$ received at the port $R_{in}$ and transmitted over the port $R_{out}$ to the near end and thus also to the echo path and the echo signal $r(i)$ received at the port $S_{in}$ from the near end (echo path) corresponds to an attenuation $A_e$ of the echo path, i.e. $A_e = x(i)-r(i)$. In the example of Figure 4 the echo path attenuation $A_e$ is 17 dB and the background noise level is -45 dBmO. When the level of the signal $x(i)$ initially is -10 dBmO, the echo canceller is rapidly converged to the echo path and the echo path model created produces an accurate echo estimate $r'(i)$, and thereby the echo component $e(i) = r(i)-r'(i)$, which has passed through the echo canceller, is attenuated to the noise level. If the level of the signal $x(i)$ then falls (e.g. when speaking in a lower voice) to the level of -20 dBmO, for instance, the background noise begins to affect the echo path model created by the echo canceller in such a manner that the model diverges and does not correspond to the actual echo path accurately any longer. Then, at a sudden rise of the level of the signal $x(i)$, a portion of the echo signal $r(i)$ is passed through as a residual echo $e(i)$. If the level of $x(i)$ falls to the level of -27 dBmO, the echo signal $r(i)$ is entirely covered by the noise and, in consequence of an adaptation of the echo canceller, the echo path model diverges entirely. If the level of $x(i)$ now suddenly rises close to 10 dBmO, the echo signal $r(i)$ passes through as such as a residual echo $e(i)$, before the echo canceller is converged again. Echo is then momentarily observed during the speech. In the echo cancellers, the intention is that a little echo can be observed at the converging stage at the beginning of the speech, but after that no echo should be observed during the call any more.

According to the invention, the detrimental phenomenon is prevented by preventing an adaptation of the echo canceller, when the level of the signal $x(i)$ falls so much that a proper echo path model cannot be preserved any longer. This is carried out as follows:

When it is not spoken at either end of a speech connection (e.g. when the levels of the signals $x(i)$ and $y(i)$ < -35 dBmO), the average noise level of the echo path is determined or calculated. At the final stage of converging the echo canceller, taking place at the beginning of the call, the difference between the levels of the signals $x(i)$ and $r(i)$ is determined, from which difference is obtained the echo path attenuation $A_e$. After this an adaptation of the echo canceller during the call is prevented, if the level of the signal $x(i)$ causing echo is lowered to a predetermined threshold level, which is to the extent of the total of a certain margin and the echo path attenuation above the calculated average noise level. The margin is such that an adaptation is prevented before the echo signal $r(i)$ is covered by the noise. The margin ranges preferably from about 1 to 5 dB.

A more detailed block diagram of the digital echo canceller according to Figure 1 is shown in Figure 2. The transmission signal $y(i)$ of the near end is linearized by an A-law converter 35A, processed by means of an adaptive FIR filter 21 and finally applied to a change-over switch SW1. The switch SW1 controlled by a control unit 26 connects the output of the filter 21 either over a non-linear processor 27 or an A-law converter 36 to the output port $S_{out}$ of the echo canceller.

A control unit 22 controls the operation, adaptation and updating of the adaptive filter 21 on the basis of the levels of the signals $y(i)$ and $x(i)$, which levels are obtained by means of level detectors 24 and 25, respectively, as well as on the basis of a disable tone detection, which is performed by means of a disable tone detection circuitry 37. On the basis of the level information received by the control unit 22 from the level detectors 24 and 25, the unit 22 determines the average noise level and an echo path attenuation $A_k$ and observes the level of the signal $x(i)$ for the control of the adaptation of the filter 21 in a manner according to the invention.

The signal $x(i)$ is linearized by A-law converters 35B, 35C and 35D, before being applied to a sample buffer 23, the level detector 25 and the disable tone detection circuitry 37, respectively. Samples taken from the signal x(i) are stored in the sample buffer 23, from which they are applied, if needed, to the filter 21 for the calculation of a correlation between them and samples taken from the signal y(i). Coefficients $a_k$ of the filter 21 are updated on the basis of this correlation.

The adaptive digital filter 21 is for instance a digital transversal filter, which models the impulse response of the echo path. Figure 4 shows an explanatory illustration of an adaptive digital transversal filter, which can be used as a filter 21 in the echo canceller of Figure 2. The signal y(i)+r(i) is a signal coming from the near end, i.e. from the port $S_{in}$. The filter 21 takes up samples from the signal x(i). The samples are delayed in delay sections $z^{-1}$ with delay of one sample and the delayed samples are weighted by the coefficients $a_k = a_o, a_1, ..., a_{n-1}$ of the filter 21. Then the estimated echo signal produced by the filter 21 is

$$r'(i) = \sum_{i=0}^{n} a_k x(i-k)$$

This echo estimate r'(i) is subtracted from the signal y(i)+r(i) in a subtracting section 42.

In the preferred embodiment of the invention, all the sections shown in Figure 2 are embodied by means of software in a digital signal processor.

The invention has been described above in connection with particular exemplifying echo canceller types and digital transversal filters. However, the method of the invention can be applied to all echo cancellers using a digital filter for modelling the echo path.

The figures and the description relating to them are only intended to illustrate the present invention, anyway. As to the details, the method of the invention can vary within the scope of the attached claims.

## Claims

1. A method of preventing an adaptive echo canceller (1) from diverging in a noisy environment, **characterized** in that the method comprises steps of:

   determining an average noise level in the echo path,
   determining an attenuation ($A_e$) of the echo path and
   preventing an adaptation of the echo canceller (1), if the level (x(i)) of the signal to be transmitted to the echo path and causing echo is lowered to a predetermined threshold level, said predetermined threshold level being a predetermined margin and the echo path attenuation ($A_e$) above the average noise level.

2. A method according to claim 1, **characterized** in that said margin is about 1 to 5 dB.

3. A method according to claim 1 or 2, **characterized** in that said average noise level of the echo path is calculated on the basis of the noise level received from the echo path, when it is not spoken at either end of a speech connection.

4. A method according to claim 1, 2 or 3, **characterized** in that said echo path attenuation ($A_e$) is calculated on the basis of the difference between the signal level (x(i)) transmitted to the echo path and the signal level (r(i)) received from the echo path.

## Patentansprüche

1. Verfahren zur Vermeidung der Divergenz eines adaptiven Echolöschers (1) in einer rauschbehafteten Umgebung,
   dadurch gekennzeichnet, daß das Verfahren die Schritte aufweist:

   Bestimmen eines durchschnittlichen Rauschpegels in dem Echopfad,

   Bestimmen einer Dämpfung ($A_e$) des Echopfades und

   Verhindern einer Adaption des Echokompenasators (1), wenn der Pegel (x(i)) des zu dem Echopfad zu übertragenden und das Echo verursachenden Signals auf einen vorbestimmten Schwellenpegel gesenkt wird, wobei der vorbestimmte Schwellenpegel ein vorbestimmter Randwert ist und die Dämpfung ($A_e$) des Echopfades über dem durchschnittlichen Rauschpegel liegt.

2. Verfahren nach Anspruch 1, dadurch gekennzeichnet, daß der Randwert etwa 1 bis 5 dB beträgt.

3. Verfahren nach Anspruch 1 oder 2, dadurch gekennzeichnet, daß der durchschnittliche Rauschpegel des Echopfades auf der Basis des Rauschpegels berechnet wird, der von dem Echopfad empfangen wird, wenn an keinem Ende der Sprechverbindung gesprochen wird.

4. Verfahren nach Anspruch 1, 2 oder 3, dadurch gekennzeichnet, daß die Dämpfung des Echopfades ($A_e$) auf der Basis der Differenz zwischen dem Signalpegel (x(i)), der zu dem Echopfad übertragen wird, und dem Signalpegel (r(i)), der von dem Echopfad empfangen wird, berechnet wird.

## Revendications

1.  Procédé permettant d'éviter la divergence d'un suppresseur d'écho adaptatif (1) dans un environnement bruyant,
    caractérisé en ce que le procédé comprend les étapes :

    de détermination d'un niveau de bruit moyen dans la voie d'écho,
    de détermination d'une atténuation ($A_e$) de la voie d'écho, et
    de prévention d'une adaptation du suppresseur d'écho (1) lorsque le niveau ($x(i)$) du signal à transmettre vers la voie d'écho et provoquant un écho est abaissé à un niveau de seuil précéterminé, ledit seuil prédéterminé étant une marge prédéterminée et l'atténuation de la voie d'écho ($A_e$) au-dessus du niveau de bruit moyen.

2.  Procédé selon la revendication 1,
    caractérisé en ce que ladite marge est d'environ 1 à 5 dB.

3.  Procédé selon la revendication 1 ou 2,
    caractérisé en ce que le niveau de bruit moyen de la voie d'écho est calculé sur la base du niveau de bruit reçu de la voie d'écho lorsqu'aucune conversation n'a lieu à aucune des deux extrémités de la liaison de conversation.

4.  Procédé selon les revendications 1, 2 ou 3,
    caractérisé en ce que l'atténuation ($A_e$) de la voie d'écho est calculée sur la base de la différence entre le niveau de signal ($x(i)$) transmis à la voie d'écho et le niveau de signal ($r(i)$) reçu de la voie d'écho.

FIG. 1

FIG. 2

21

35A
y(i)

43
z⁻¹

44
z⁻¹

45
z⁻¹

x(i)

a₀    a₁    aₙ-1

41    Σ

42
y(i)-r'(i)

+

SW1

r'(i)

FIG. 3

L

-10 dBm0

-20dBm0

Aₑ

-27dBm0

-45dBm0

x(i)

r(i)

e(i)    e(i)    e(i)

t

FIG. 4